# EUROPÄISCHE PATENTANMELDUNG

(11) **EP 2 607 744 A2**
(43) Veröffentlichungstag der Anmeldung: **26.06.2013**
(21) Anmeldenummer: 12198824.0
(22) Anmeldetag: 21.12.2012
(51) Int. Cl.: F16F 15/167

(54) **Viskositätsdrehschwingungsdämpfer oder Viskositätsdrehschwingungstilger**

(30) Priorität: 22.12.2011 DE 102011122034
(71) Anmelder: Hasse & Wrede GmbH, 12681 Berlin (DE)
(72) Erfinder: Knopf, Dr. Florian, 14199 Berlin (DE)
(74) Vertreter: Specht, Peter

(57) **Zusammenfassung**

Viskositätsdrehschwingungsdämpfer (1) oder Viskositätsdrehschwingungstilger (1) mit einem beispielsweise an einer Kurbelwelle eines Motors, insbesondere eines Verbrennungsmotors, befestigbaren Nabenteil (2) und mit einem Schwungring (3), der relativ zum Nabenteil (2) verdrehbar gelagert ist, wobei zwischen Nabenteil (2) und Schwungring (3) ein Scherspalt (6) gebildet ist, welcher mit einem flüssigen Schermedium, wie z.B. einem Silikonöl gefüllt ist, wobei das Nabenteil (2) mit einem umlaufenden Flansch (4) versehen ist, welcher von dem Schwungring (3) von außen umschlossen ist, wobei der Scherspalt (6) zwischen einem radial äußeren Bereich des Flansches (4) einerseits und den entsprechenden Bereichen des Schwungringes (3) andererseits begrenzt ist.

## Beschreibung

Die vorliegende Erfindung betrifft einen Viskositätsdrehschwingungsdämpfer oder Viskositätsdrehschwingungstilger mit einem beispielsweise an einer Kurbelwelle eines Motors, insbesondere eines Verbrennungsmotors, befestigbaren Nabenteil und mit einem Schwungring, der relativ zum Nabenteil verdrehbar gelagert ist, wobei zwischen Nabenteil und Schwungring ein Scherspalt gebildet ist, welcher mit einem flüssigen Schermedium wie z.B. einem Silikonöl gefüllt ist.

Viskositätsdrehschwingungsdämpfer oder Viskositätsdrehschwingungstilger der gattungsgemäßen Art sind in vielerlei Ausführungsformen bekannt.

Gemeinsam ist allen bislang bekannten Konstruktionen, dass der Schwungring in einem ein Bestandteil des Nabenteiles bildenden Gehäuse, welches durch einen Deckel dicht verschlossen ist, untergebracht ist.

Die konventionelle Bauweise derartiger Dämpfer oder Tilger hat sich grundsätzlich zwar bewährt, allerdings hat das Massenträgheitsmoment des Gehäuses eines entsprechend gestalteten Dämpfers oder Tilgers häufig einen negativen Einfluss auf das Drehschwingungsverhalten einer Kurbelwelle.

Der vorliegenden Erfindung liegt die Aufgabe zugrunde, einen Viskositätsdrehschwingungsdämpfer oder einen Viskositätsdrehschwingungstilger der gattungsgemäßen Art zu verbessern und in seiner Herstellungsweise kostengünstiger zu gestalten.

Diese Aufgabe wird erfindungsgemäß dadurch gelöst, dass das Nabenteil mit einem umlaufenden Flansch versehen ist, welcher von dem Schwungring von außen umschlossen ist, wobei der Scherspalt zwischen einem radial äußeren Bereich des Flansches einerseits und den entsprechenden Bereichen des Schwungringes andererseits begrenzt ist.

Der Flansch weist einen Radialabschnitt auf, der über einen Lagerabschnitt mit dem Nabenteil verbunden ist. Weitere Ausgestaltungen sehen vor, dass der Radialabschnitt mit einem umlaufenden Randabschnitt versehen ist, der sich in axialer Richtung erstreckt und somit ein Flansch mit einem L-förmigen oder einem T-förmigen Querschnitt gebildet ist. Unter dem Begriff "umschlossen" ist zu verstehen, dass der Radialabschnitt und der Lagerabschnitt, und in den Ausführungen mit dem umlaufenden Randabschnitt auch der umlaufende Randabschnitt, von dem Schwungring in einem Abstand umgeben sind. Dabei ist der Scherspalt im Bereich des Radialabschnitts und in weiterer Ausgestaltung im Bereich des Randabschnitts ausgebildet. Zwischen dem Schwungring und dem Radialabschnitt können auch Dichtungen und/oder Lagerungen vorgesehen sein, auch diese sind in dem Begriff "umschlossen" mit einbezogen. Weiterhin schließt der Begriff "umschlossen" auch nutförmige Ausbildungen für die Dichtungen, Lagerungen und Reservoirs für ein fluides Schermedium ein.

Die Erfindung löst sich insoweit von dem Gedanken, dass der Schwungring innerhalb eines Gehäuses angeordnet sein soll und schlägt abweichend hiervon vor, den Schwungring praktisch in der Relation zum Nabenteil außenliegend anzuordnen. Hierdurch wird das Massenträgheitsmoment des fest mit einer Kurbelwelle verbundenen Nabenteiles vergleichsweise klein gehalten, während das Massenträgheitsmoment des Schwungringes bei gegenüber vergleichbaren Konstruktionen unverändert großen Bauraum erhöht und somit die Wirksamkeit des Dämpfers oder Tilgers verbessert werden kann.

Darüber hinaus ist festzustellen, dass durch den Verzicht auf ein den Schwungring umgebendes Gehäuse auch erhebliche Materialeinsparungen für den gesamten Dämpfer oder Träger erzielt werden, die nicht unbeträchtlich sind. Ausführungsbeispiele der Erfindung sind in den beigefügten Zeichnungen dargestellt und werden im Folgenden näher beschrieben. Es zeigen:
- Figur 1: eine Schnittdarstellung durch einen erfindungsgemäßen Viskositätsdrehschwingungsdämpfer oder Viskositätsdrehschwingungstilger;
- Figur 2: einen Schnitt durch einen Viskositätsdrehschwingungsdämpfer oder Viskositätsdrehschwingungstilger nach einem weiteren Ausführungsbeispiel der Erfindung;
- Figur 3: eine den Figuren 1 und 2 entsprechende Schnittdarstellung nach einem weiteren Ausführungsbeispiel der Erfindung; und
- Figur 4-6: Querschnittsansichten der Flansche und Flanschbereiche der Ausführungsbeispiele nach den Figuren 1 bis 3.

In den Zeichnungen ist mit dem Bezugszeichen 1 generell ein Viskositätsdrehschwingungsdämpfer oder Viskositätsdrehschwingungstilger bezeichnet, wobei in Folgenden der Einfachheit halber nur noch von einem Viskositätsdrehschwingungsdämpfer oder noch weiter vereinfacht, von einem Dämpfer gesprochen wird.

Bei allen Ausführungsbeispielen der Erfindung umfasst der Viskositätsdrehschwingungsdämpfer 1 ein Nabenteil 2 und einen Schwungring 3.

Der Drehschwingungsdämpfer 1 ist insgesamt in bekannter Weise beispielsweise an einer Kurbelwelle eines Motors, insbesondere eines Verbrennungsmotors befestigbar.

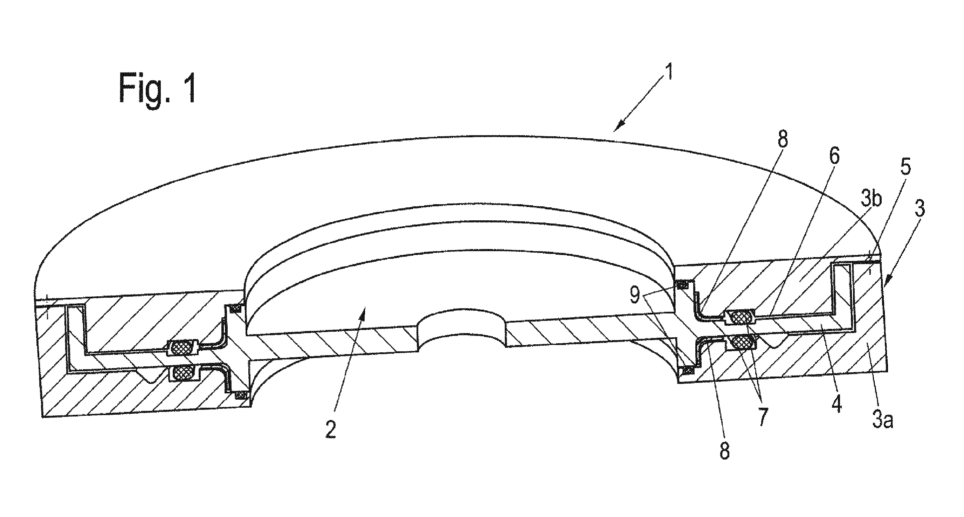

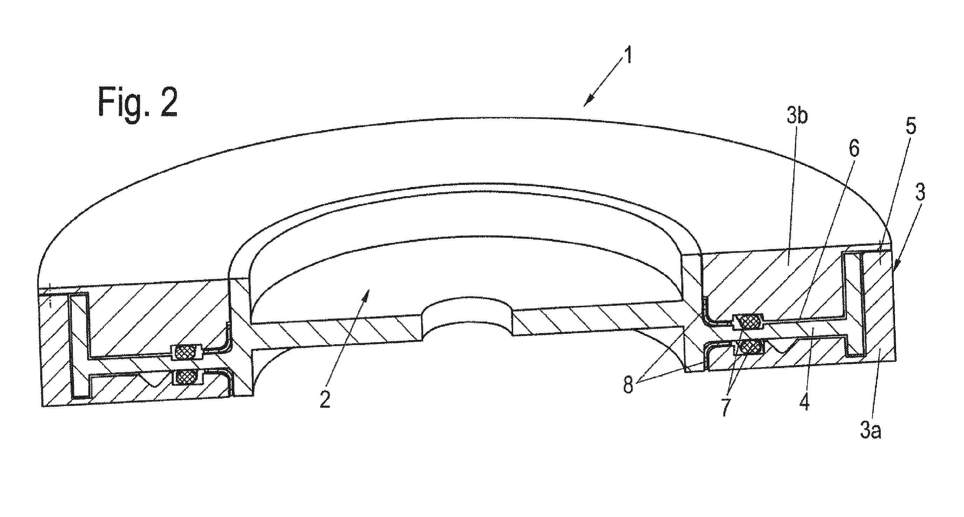

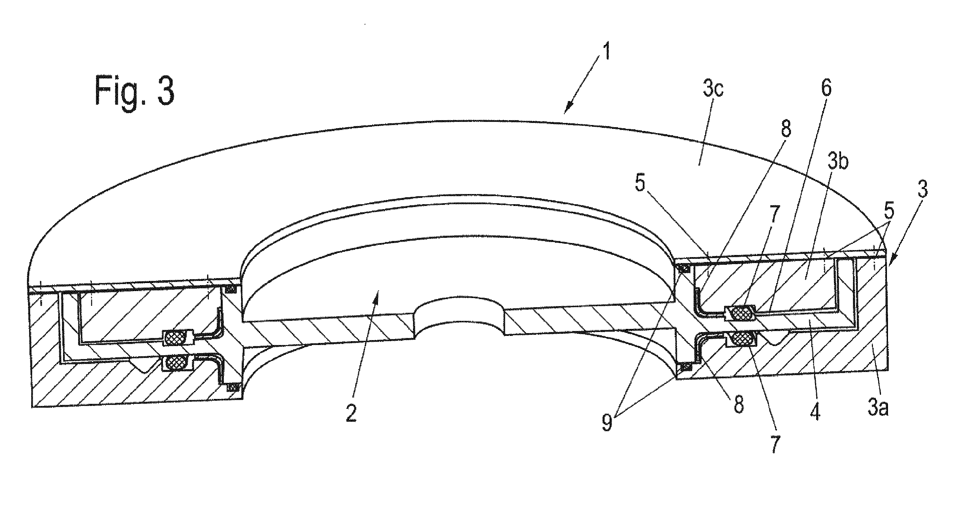

Am Nabenteil 2 ist jeweils bei allen Ausführungsbeispielen ein Flansch 4 angeformt, der im Querschnitt L-förmig (Figuren 1 und 3), T-förmig (Figur 2) oder (nicht dargestellt) gerade ausgebildet sein kann.

Der jeweilige Schwungring 3 ist zumindest zweiteilig ausgebildet, wie bei den Figuren 1 und 2 und umschließt den jeweiligen Flansch 4. Dabei sind die beiden Teile 3a und 3b des Schwungringes 3 fest miteinander verbunden, beispielsweise durch angedeutete Schrauben 5 oder durch andere bekannte Verbindungsmittel.

Die beiden Teile 3a und 3b des Schwungringes 3 bei den Ausführungsbeispielen nach den Figuren 1 und 2 umschließen den Flansch 4 von außen.

Dabei ist zwischen einem radial äußeren Bereich des Flansches 4 einerseits und den entsprechenden Bereichen des Schwungringes 3 andererseits ein Scherspalt 6 gebildet, der zur Mitte des Nabenteiles 2 hin gesehen durch Dichtungen 7 abgedichtet und mit einem fluiden Schermittel wie beispielsweise einem Silikonöl gefüllt ist. Zur Nabenmitte hin gesehen ist der zweiteilige Schwungring 3 auf Bundbuchsen 8 drehbar gelagert, wobei beim Ausführungsbeispiel nach Figur 1 der durch die Bundbuchsen 8 gebildete Lagerbereich durch zusätzliche Dichtringe 9 abgedichtet und somit gegen das Eindringen von Schmutz geschützt ist.

Figur 3 zeigt ein insbesondere herstellungstechnisch einfaches Ausführungsbeispiel eines erfindungsgemäßen Dämpfers 1, bei dem der Schwungring 3 aus insgesamt drei Teilen 3a, 3b und 3c hergestellt ist, wobei das Teil 3c in diesem Falle ein Deckel ist, der mit dem Teil 3b des Schwungringes beispielsweise durch Schrauben 5 oder dergleichen verbunden ist, während dieser Verbund aus Teil 3c und 3b mit dem übrigen Teil 3a des Schwungringes zu einer Baueinheit durch Schrauben 5 oder dergleichen verbunden ist. Die Querschnittsform des Schwungringes 3 entspricht derjenigen des Schwungringes 3 im Ausführungsbeispiel nach Figur 1, wobei das Teil 3b beim Ausführungsbeispiel nach Figur 3 mit dem Deckel 3c zu einer Baueinheit zusammengesetzt ist mit dem Vorteil, dass das Teil 3b keine aufwendige Bearbeitung erfahren muss.

Auch beim Ausführungsbeispiel gemäß Figur 3 ist der Lagerbereich der Bundbuchsen 8 durch Dichtringe 9 gegen das Eindringen von Schmutz oder Feuchtigkeit geschützt.

Bei allen Ausführungsbeispielen der Erfindung wird der Vorteil erzielt, dass durch die Anordnung des Schwungringes 3 außerhalb des Flansches 4 des Nabenteiles 2 auf ein Gehäuse des Nabenteiles 2 verzichtet werden kann, in dem der Schwungring 3 untergebracht ist, wie dies bei vorbekannten Konstruktionen der Fall ist. Hierdurch werden eine erhebliche Materialeinsparung und eine Vergrößerung des Massenträgheitsmomentes des Schwungringes 3 erreicht. Insbesondere wird hierdurch die Wirksamkeit des Dämpfers insgesamt beträchtlich verbessert.

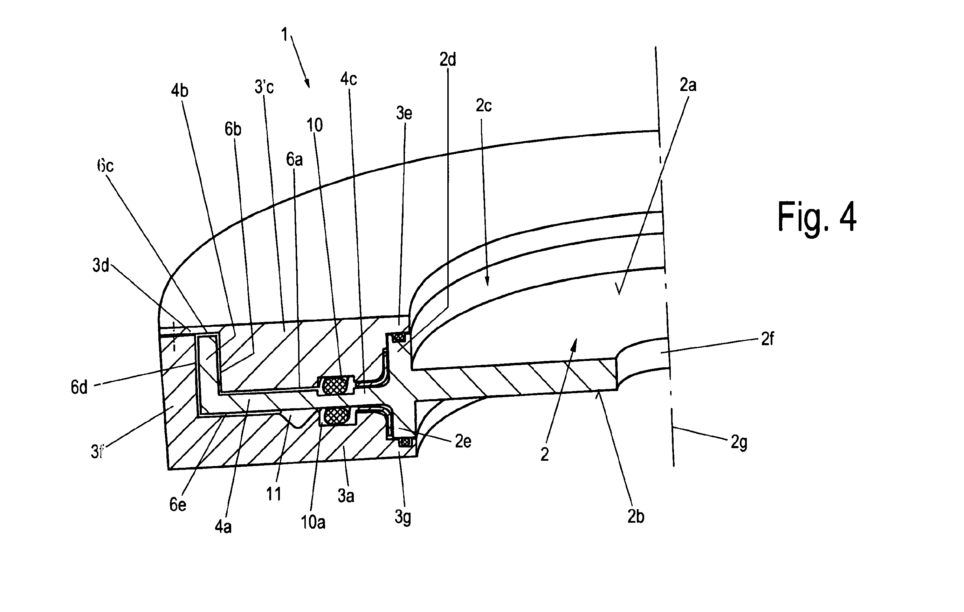

In den Figuren 4 bis 6 sind Querschnittsansichten der Flansche 4 und Flanschbereiche der Ausführungsbeispiele nach den Figuren 1 bis 3 dargestellt. Richtungsangaben "oben", "unten", "Ober-/Unterseite" beziehen sich auf die Darstellungen in den Figuren. "Innenseiten" weisen zum Zentrum, d.h. zu einer zentralen Achse 2g hin, "Außenseiten" in die Gegenrichtung dazu.

In allen Ausführungsbeispielen nach Figur 4 bis 6 weist das Nabenteil 2 eine in den Figuren 4 bis 6 nach oben weisende Nabenseite 2a und eine nach unten weisende Nabenseite 2b auf, welche durch eine zentrale, durchgehenden Öffnung 2f mit einer Achse 2g verbunden sind. Die Öffnung 2f ist nur schematisch gezeigt, sie dient zur Befestigung und/oder Zentrierung des Viskositätsschwingungsdämpfers 1 an der oben genannten Kurbelwelle.

Die Nabenseiten 2a, 2b sind hier als plane, kreisringförmige Flächen ausgeführt, die durch einen umlaufenden Kragen 2c begrenzt sind. Der Kragen 2c erstreckt sich in axialer Richtung, hier parallel zu der Achse 2g, wobei ein Kragenabschnitt 2d über die obere Nabenseite 2a herausragt. Ein weiterer Kragenabschnitt 2e erstreckt sich dazu in entgegengesetzter axialer Richtung nach unten und überragt dabei die untere Nabenseite 2b, hier in gleichem Maße wie der Kragenabschnitt 2d. Eine Dicke der Kragenabschnitte 2d, 2e in radialer Richtung entspricht hier etwa der Dicke des Nabenteils 2 mit den Nabenseiten 2a und 2b.

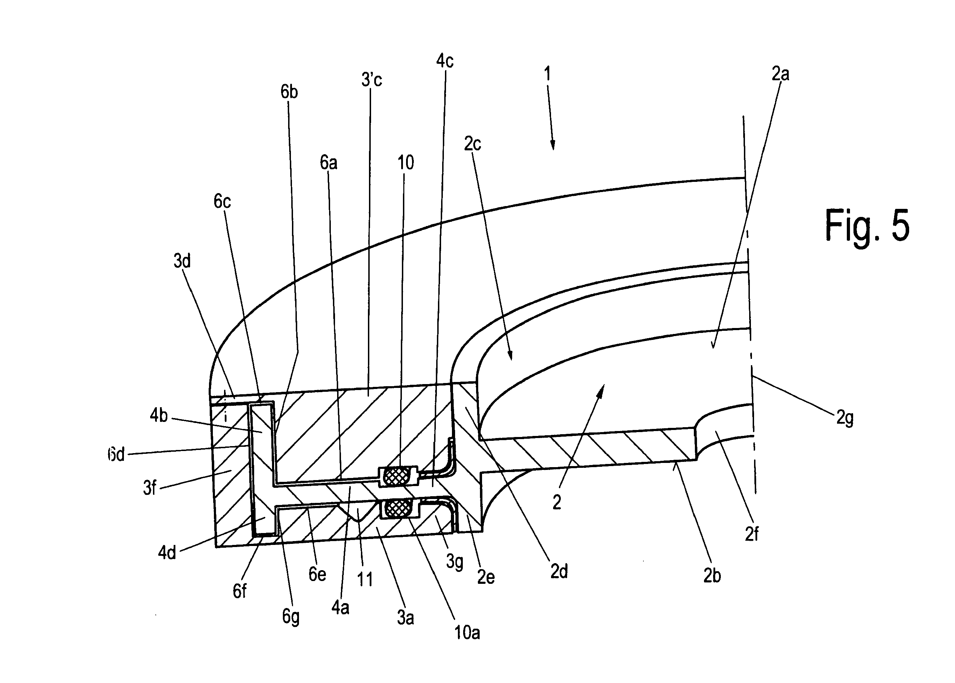

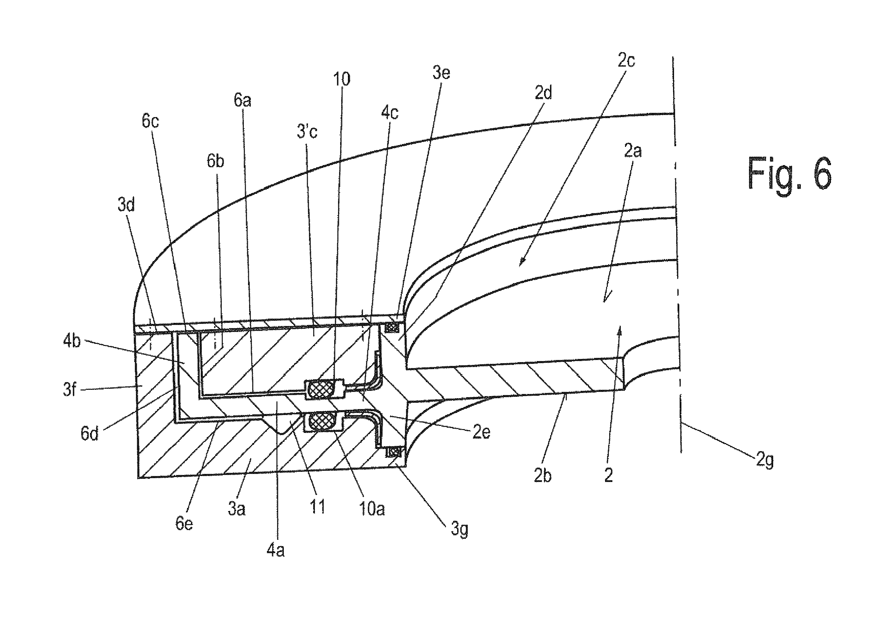

In den Ausführungsbeispielen nach Figur 4 und 6 ist die oben liegende Seite des Kragenabschnitts 2d mit einer Nut für den Dichtring 9 versehen, wobei sich die Nuten jeweils in axialer Richtung parallel zur Achse 2g in ihrer Tiefe und radial in einer dem Dichtring 9 entsprechenden Breite ausdehnen. Im Gegensatz dazu ist der Kragen 2d des Nabenteils 2 im zweiten Ausführungsbeispiel nach Figur 5 ohne Nuten für die Dichtringe 9 ausgebildet.

Der Flansch 4 weist in allen Ausführungsbeispielen einen sich radial erstreckenden Radialabschnitt 4a auf, der konzentrisch zum Nabenteil 2 ist und dessen gedachte radiale Mittelebene rechtwinklig zur Achse 2g jedoch zu der gedachten radialen Mittelebene des Nabenteils 2 axial versetzt ist. Der Radialabschnitt 4a ist dabei mit der radialen Außenseite des Kragens 2c fest verbunden. In dem Ausführungsbeispiel nach Figur 4 ist der Radialabschnitt 4a derart angeordnet, dass seine Oberseite gegenüber der oberen Nabenseite 2a um etwa ein Viertel der Dicke des Nabenteils 2 axial nach unten versetzt ist, wobei die Unterseite des Radialabschnitts 4a etwa in gleicher Ebene der unteren Nabenseite 2b verläuft. Im zweiten Ausführungsbeispiel nach Figur 5 ist der Radialabschnitt 4a derart axial nach unten gegenüber dem Nabenteil 2 versetzt, dass die Oberseite des Radialabschnitts 4a etwa in gleicher Ebene der oberen Nabenseite 2a verläuft. Und im dritten Ausführungsbeispiel nach Figur 6 verläuft die Ebene der unteren Nabenseite 2a etwa durch die Mitte der axialen Dicke des Radialabschnitts 4a des Flansches 4.

Der L-förmige Flansch 4 nach Figur 4 und 6 weist jeweils als kurzen Schenkel einen sich in Axialrichtung parallel zur Achse 2g nach oben erstreckenden Randabschnitt 4b auf. Eine Oberseite des Randabschnitts 4b ist gemäß Figur 4 in Axialrichtung höher als eine Oberseite des Kragenabschnitts 2d angeordnet, wohingegen diese Höhen der Oberseiten im Ausführungsbeispiel nach Figur 6 gleich hoch sind. Im Ausführungsbeispiel nach Figur 5 ist die Oberseite des Kragenabschnitts 2d höher als die Oberseite des Randabschnitts 4b, wobei der T-förmige Flansch 4 im zweiten Ausführungsbeispiel nach Figur 5 einen weiteren sich nach unten erstreckenden Randabschnitt 4d aufweist, dessen Unterseite höher liegt als die Unterseite des unteren Kragenabschnitts 2e. Die Randabschnitte 4b, 4d des T-förmigen Flansches 4 sind asymmetrisch zum Radialabschnitt 4a, d.h. der obere Randabschnitt 4b ist länger als der untere Randabschnitt 4d.

Der Radialabschnitt 4a des Flansches 4 weist in allen drei Ausführungsbeispielen einen Lagerabschnitt 4c auf, der in die Verbindung des Flansches 4 mit dem Kragen 2c des Nabenteils 2 übergeht. In diesem Bereich oberhalb und unterhalb des Lagerabschnitts 4c ist jeweils eine Bundbuchse 8 angeordnet, die sich mit einem Abschnitt jeweils auf dem Lagerabschnitt 4c und mit einem in etwa rechtwinklig dazu verlaufenden Abschnitt jeweils an dem Kragen 2c abstützt. Zwischen dem Lagerabschnitt 4c und dem Radialabschnitt 4a ist auf jeder Seite (Oberseite und Unterseite) eine Dichtung 7 angeordnet, wobei diese auf der Oberseite zwischen dem Lagerabschnitt 4c und dem Radialabschnitt 4a in einer Ausnehmung aufgenommen ist.

Das Teil 3a des Schwungrings 3 ist in jedem Ausführungsbeispiel jeweils im Wesentlichen an die Unterseite des Radialabschnitts 4a angepasst, d.h. an die Kontur, und weist eine Nut 10a zur Aufnahme der unteren Dichtung 7 auf. Neben dieser Nut 10a ist etwa unterhalb der Mitte des Radialabschnitts 4a ein Reservoir 11 mit einem dreieckförmigen Querschnitt vorgesehen. Dieses Reservoir 11 in Art einer umlaufenden Rinne oder auch Nut kommuniziert mit dem Scherspalt 6 und dient zur Aufnahme und Speicherung des fluiden Schermediums.

Im äußeren Randbereich ist das Teil 3a des Schwungrings 3 mit einem sich in axialer Richtung erstreckenden Außenabschnitt 3f ausgebildet, welcher an die jeweilige Form des Randabschnitts 4b, 4d angepasst ist. Bei dem zweiten Ausführungsbeispiel nach Figur 5 ist das Teil 3a im Bereich des unteren Randabschnitts 4d des Flansches 4 entsprechend abgestuft. Im inneren Randbereich (zur Achse 2g hin weisend) ist das Teil 3a des Schwungrings 3 mit einem Innenabschnitt 3g versehen, welcher jeweils Abstützflächen für die untere Bundbuchse 8 bildet und an den unteren Kragenabschnitt 2e des Kragens 2c angepasst ist. Dabei weist der Innenabschnitt 3g im ersten und dritten Ausführungsbeispiel eine Nut für den unten liegenden Dichtring 9 auf und übergreift die untere Seite des Kragenabschnitts 2e in radialer Richtung zur Achse 2g hin.

Das oben angeordnete Teil 3b des Schwungrings 3 weist einen Körper 3'c auf, der an die Oberseite des Radialabschnitts 4a, die Innenseite (zur Achse 2g hin weisend) des Randabschnitts 4b und die Außenseite des oberen Kragenabschnitts 2d angepasst ist. Dabei weist der Körper 3'c eine Nut 10 für die obere Dichtung 7 auf, welche der unteren Nut 10a und der unteren Dichtung 7 im Teil 3a gegenüber liegt. Ein Eckbereich des Teils 3b, der einer Unterseite der Oberseite des Lagerabschnitts 4c und mit einer Innenseite (zur Achse 2g hin weisend) einem Außenabschnitt des Kragens 2c gegenüberliegend angeordnet ist, bildet eine Aufnahme für die obere Bundbuchse 8. Im ersten Ausführungsbeispiel überdeckt ein Dichtabschnitt 3e in radialer Richtung die Oberseite des Kragenabschnitts 2d, wohingegen im zweiten Ausführungsbeispiel kein Dichtabschnitt 3e vorhanden ist und der Körper 3'c mit seiner Oberseite mit der Oberseite des Kragenabschnitts 2d fluchtet. Weiterhin ist der Körper im ersten und zweiten Ausführungsbeispiel mit einem Befestigungsabschnitt 3d ausgebildet, welcher sich radial nach außen über den Außenabschnitt 3f des Teils 3a erstreckt. Im dritten Ausführungsbeispiel ist der Deckel 3c vorgesehen, welcher mit dem Befestigungsabschnitt 3d und dem Dichtabschnitt 3e versehen ist.

Eine Dicke des Deckels 3c und des Befestigungsabschnitts 3d (jeweils in axialer Richtung) entspricht etwa einer Dicke des Nabenteils 2 in axialer Richtung, wobei eine Dicke des Dichtabschnitts 3e in axialer Richtung etwa die Hälfte der Dicke des Nabenteils 2 in axialer Richtung beträgt.

Der Scherspalt 6 ist zwischen dem Schwungring 3 und dem Flansch 4 ist je nach Ausführungsbeispiel durch mehrere Spaltabschnitte gebildet, welche untereinander, mit dem Reservoir 11 und Teilabschnitten der Nuten 10, 10a, die durch die Dichtungen 7 jeweils begrenzt sind, kommunizieren. So weist der Scherspalt 6 gemäß dem ersten Ausführungsbeispiel nach Figur 4 fünf Spaltabschnitte 6a, 6b, 6c, 6d und 6e auf. Ein erster Spaltabschnitt 6a ist mit der Nut 10 im Körper 3'c des Schwungrings 3 und der gegenüber liegenden Nut zwischen Radialabschnitt 4a und Lagerabschnitt 4c des Flansches 4 verbunden, wobei der erste Spaltabschnitt 6a zwischen der Oberseite des Radialabschnitts 4a des Flansches 4 und der Unterseite des Körpers 3'c des Schwungrings 3 angeordnet ist. Ein zweiter Spaltabschnitt 6b ist mit dem radial äußeren Ende des ersten Spaltabschnitts 6a verbunden und erstreckt sich rechtwinklig zu diesem zwischen der Innenseite des Randabschnitts 4b des Flansches 4 und dem außenliegenden Seite des Körpers 3'c des Schwungrings 3, wobei sich ein dritter Spaltabschnitt 6c rechtwinklig zu dem zweiten Spaltabschnitt 6b und mit diesem verbunden anschließt. Der dritte Spaltabschnitt 6c verläuft zwischen der Oberseite des Randabschnitts 4b des Flansches 4 und der Unterseite des Befestigungsabschnitts 3d des Schwungrings 3 radial nach außen. Es schließt sich ein vierter Spaltabschnitt 6d an, der mit dem dritten Spaltabschnitt 6c verbunden ist und sich rechtwinklig davon nach unten zwischen der Außenseite des Randabschnitt 4b des Flansches 4 und der Innenseite des Außenabschnitts 3f des Schwungrings 3 erstreckt. Ein fünfter Spaltabschnitt 6e ist mit dem vierten Spaltabschnitt 6d verbunden und erstreckt sich rechtwinklig zu diesem zur Innenseite in Richtung auf die Achse 2g. Der fünfte Spaltabschnitt 6e verläuft zwischen der Unterseite des Radialabschnitts 4a des Flansches 4 und der Oberseite des Teils 3a des Schwungrings 3, wobei der fünfte Spaltabschnitt 6e schließlich in dem Reservoir 11 endet, welches mit dem Teilabschnitt der Nut 10a verbunden ist. Somit sind der Radialabschnitt 4a und der Randabschnitt 4b vollständig von den Spaltabschnitten 6a-e des Scherspalts 6 einschließlich des Reservoirs 11 umgeben.

Der Scherspalt 6 unterscheidet sich im zweiten Ausführungsbeispiel nach Figur 5 vom ersten Ausführungsbeispiel nach Figur 4 dadurch, dass die fünf Spaltabschnitte 6a-e mit zwei weiteren Spaltabschnitten 6f und 6g ergänzt sind. So ist der vierte Spaltabschnitt 6d mit einem sechsten Spaltabschnitt 6f verbunden, der zwischen einer Unterseite des unteren Randabschnitts 4d des Flansches 4 und der abgestuften Oberseite des Teils 3a des Schwungrings 3 angeordnet ist und sich rechtwinklig zum vierten Spaltabschnitt 6d zur Innenseite zur Achse 2g erstreckt. Ein siebter Spaltabschnitt 6g schließt sich an, der mit dem sechsten Spaltabschnitt 6f verbunden ist und sich rechtwinklig dazu nach oben erstreckt. Der sechste Spaltabschnitt 6g verläuft zwischen der zur Achse 2g weisenden Innenseite des unteren Randabschnitts 4d des Flansches 4 und einer Außenseite der Abstufung des Teils 3a des Schwungrings 3. Der sechste Spaltabschnitt 6g ist dann mit dem bereits oben beschriebenen fünften Spaltabschnitt 6e verbunden.

Im dritten Ausführungsbeispiel ist im Gegensatz zum ersten Ausführungsbeispiel der dritte Spaltabschnitt 6c zwischen der Oberseite des Randabschnitts 4b und einem Teilabschnitt der Unterseite des Befestigungsabschnitts 3d des Deckels 3c angeordnet.

Der Flansch 4 mit dem Radialabschnitt 4a, Randabschnitt 4b, 4d und Lagerabschnitt 4c weist somit einen asymmetrischen Querschnitt im Radialschnitt auf, d.h. auch der T-förmige Querschnitt ist asymmetrisch. Natürlich können auch symmetrische Querschnitte Verwendung finden.

Wenn der Flansch 4 nur aus dem Radialabschnitt 4a mit dem Lagerabschnitt 4c besteht und keinen Randabschnitt 4b, d aufweist, ist der Querschnitt im Radialschnitt symmetrisch.

### Bezugszeichenliste

- 1: Viskositätsdrehschwingungsdämpfer, Viskositätsdrehschwischwingunstilger
- 2: Nabenteil
- 2a, 2b: Nabenseite
- 2c: Kragen
- 2d, 2e: Kragenabschnitt
- 2f: Öffnung
- 2g: Achse
- 3: Schwungring
- 3a: Teil
- 3b: Teil
- 3c: Deckel
- 3'c: Körper
- 3d: Befestigungsabschnitt
- 3e: Dichtabschnitt
- 3f: Außenabschnitt
- 3g: Innenabschnitt
- 4: Flansch
- 4a: Radialabschnitt
- 4b, 4d: Randabschnitt
- 4c: Lagerabschnitt
- 5: Schrauben
- 6: Scherspalt
- 6a-6g: Spaltabschnitt
- 7: Dichtung
- 8: Bundbuchse
- 9: Dichtring
- 10, 10a: Nut
- 11: Reservoir

## Patentansprüche

1. Viskositätsdrehschwingungsdämpfer (1) oder Viskositätsdrehschwingungstilger (1) mit einem beispielsweise an einer Kurbelwelle eines Motors, insbesondere eines Verbrennungsmotors, befestigbaren Nabenteil (2) und mit einem Schwungring (3), der relativ zum Nabenteil (2) verdrehbar gelagert ist, wobei zwischen Nabenteil (2) und Schwungring (3) ein Scherspalt (6) gebildet ist, welcher mit einem flüssigen Schermedium, wie z.B. einem Silikonöl gefüllt ist, **dadurch gekennzeichnet , dass** das Nabenteil (2) mit einem umlaufenden Flansch (4) versehen ist, welcher von dem Schwungring (3) von außen umschlossen ist, wobei der Scherspalt (6) zwischen einem radial äußeren Bereich des Flansches (4) einerseits und den entsprechenden Bereichen des Schwungringes (3) andererseits begrenzt ist.

2. Viskositätsdrehschwingungsdämpfer (1) oder Viskositätsdrehschwingungstilger (1) nach Anspruch 1, **dadurch gekennzeichnet, dass** der Flansch (4) im Querschnitt gerade ausgebildet ist.

3. Viskositätsdrehschwingungsdämpfer (1) oder Viskositätsdrehschwingungstilger (1) nach Anspruch 1, **dadurch gekennzeichnet, dass** der Flansch (4) im Querschnitt L-förmig gestaltet ist.

4. Viskositätsdrehschwingungsdämpfer (1) oder Viskositätsdrehschwingungstilger (1) nach Anspruch 1, **dadurch gekennzeichnet, dass** der Flansch (4) im Querschnitt T-förmig gestaltet ist.

5. Viskositätsdrehschwingungsdämpfer (1) oder Viskositätsdrehschwingungstilger (1) nach einem der vorhergehenden Ansprüche, **dadurch gekennzeichnet, dass** der Schwungring (3) nabenseitig über Bundbuchsen (8) drehbar zum Nabenteil (2) gelagert ist.

6. Viskositätsdrehschwingungsdämpfer (1) oder Viskositätsdrehschwingungstilger (1) nach Anspruch 5, **dadurch gekennzeichnet, dass** der durch die Bundbuchsen (8) gebildete Lagerbereich nach außen hin durch Dichtringe (9) abgedichtet ist.

7. Viskositätsdrehschwingungsdämpfer (1) oder Viskositätsdrehschwingungstilger (1) nach einem der vorhergehenden Ansprüche, **dadurch gekennzeichnet, dass** der Scherspalt (6) zur Nabenmitte hin gesehen durch Dichtungen (7) abgedichtet ist.

8. Viskositätsdrehschwingungsdämpfer (1) oder Viskositätsdrehschwingungstilger (1) nach einem der vorhergehenden Ansprüche, **dadurch gekennzeichnet, dass** der Schwungring (3) aus zwei miteinander verbundenen Schwungringteilen (3a) und (3b) besteht.

9. Viskositätsdrehschwingungsdämpfer (1) oder Viskositätsdrehschwingungstilger (1) nach einem der Ansprüche 1 bis 7, **dadurch gekennzeichnet, dass** der Schwungring (3) aus insgesamt drei Schwungringteilen (3a, 3b, 3c) besteht, wobei die Schwungringteile (3b) und (3c) untereinander fest miteinander verbunden sind und diese Einheit mit dem weiteren Schwungringteil (3a) zu einem Schwungring zusammengesetzt und fest mit dem Schwungringteil (3a) verbunden ist.

10. Viskositätsdrehschwingungsdämpfer (1) oder Viskositätsdrehschwingungstilger (1) nach einem der vorhergehenden Ansprüche, **dadurch gekennzeichnet, dass** die Verbindung der Schwungringteile (3a, 3b, 3c) miteinander durch Schrauben (5) oder beliebige andere bekannte Verbindungsmittel erfolgt.

11. Viskositätsdrehschwingungsdämpfer (1) oder Viskositätsdrehschwingungstilger (1) nach einem der vorhergehenden Ansprüche, **dadurch gekennzeichnet, dass** das Nabenteil (2) einen umlaufenden Kragen (2c) aufweist.

12. Viskositätsdrehschwingungsdämpfer (1) oder Viskositätsdrehschwingungstilger (1) nach Anspruch 11, **dadurch gekennzeichnet, dass** ein durch Bundbuchsen (8) gebildeter Lagerbereich nach außen hin durch Dichtringe (9) an dem umlaufende Kragen (2c) abgedichtet ist.

13. Viskositätsdrehschwingungsdämpfer (1) oder Viskositätsdrehschwingungstilger (1) nach einem der vorhergehenden Ansprüche, **dadurch gekennzeichnet, dass** der Flansch (4) axial versetzt an dem Nabenteil (2) angeordnet ist.

14. Viskositätsdrehschwingungsdämpfer (1) oder Viskositätsdrehschwingungstilger (1) nach einem der vorhergehenden Ansprüche, **dadurch gekennzeichnet, dass** der Scherspalt (6) Spaltabschnitte (6a-6g) aufweist.

15. Viskositätsdrehschwingungsdämpfer (1) oder Viskositätsdrehschwingungstilger (1) nach Anspruch 14, **dadurch gekennzeichnet, dass** die Spaltabschnitte (6a-6g) mit mindestens einem Reservoir (11) kommunizieren.
